Europäisches Patentamt

European Patent Office

Office européen des brevets

(11) Publication number: **0 098 264**
**B1**

(12) **EUROPEAN PATENT SPECIFICATION**

(45) Date of publication of patent specification: **09.08.89**  (51) Int. Cl.⁴: **H 04 N 5/84**

(21) Application number: **82900698.0**

(22) Date of filing: **12.01.82**

(86) International application number:
**PCT/US82/00026**

(87) International publication number:
**WO 83/02534 21.07.83 Gazette 83/17**

(54) **ELECTRONIC MULTI-IMAGER.**

(43) Date of publication of application:
**18.01.84 Bulletin 84/03**

(45) Publication of the grant of the patent:
**09.08.89 Bulletin 89/32**

(84) Designated Contracting States:
**DE FR GB NL**

(56) References cited:
GB-A-1 166 091
US-A-3 328 522
US-A-3 784 736
US-A-3 961 315
US-A-4 058 832
US-A-4 058 833
US-A-4 163 249
US-A-4 205 340
US-A-4 210 932
US-A-4 233 636
US-A-4 253 154
US-A-4 282 546
PATENTS ABSTRACTS OF JAPAN, vol. 6, no.
25 (E-94)903r, 13th February 1982 & JP-A-56
144 681
SMPTE Journal, Volume 87, January 1978,
Reginald F.H. McCoy: "A New Digital Video
Special-Effects Equipment", pages 20-23

(73) Proprietor: **ELSCINT INC.**
**930 Commonwealth Avenue**
**Boston MA 02215 (US)**

(72) Inventor: **INBAR, Dan**
**22 De'Israeli Street**
**Hafia (IL)**

(74) Representative: **Freed, Arthur Woolf et al**
**MARKS & CLERK 57-60 Lincoln's Inn Fields**
**London WC2A 3LS (GB)**

## Description

Technical field

This invention relates to a technique called multi-imaging by which a set of images sequentially displayed on a TV monitor are photographed on a single sheet of film such that the images on the film are arranged in a predetermined pattern.

Background art

Multi-imaging is currently used in nuclear medical studies to organize a number of related images obtained by a gamma camera or a computerized axial tomographic scanner on a single sheet of film to facilitate medical analysis of the images. It is conventional practice to place a plurality of images (from 2—36) on a single sheet of x-ray film which may vary in size from $5''\times7''$ to $11''\times14''$. For example, the set of images on a film sheet may constitute a whole medical study and would include sequentially obtained images of different cross-sections of the same organ. Alternatively, the same image may be windowed, or the data of the image processed to enhance detail, and all of the images so obtained placed on the same film sheet.

In all of these studies, the input data are in the form of information stored in a digital memory and displayed in real time or after processing on a TV monitor. The image of the TV monitor is focused on a film sheet by an optical system that is part of the multi-imager. By reason of the optical system and relative movement between the TV monitor and the film, the image on the TV monitor can be projected onto a preselected location on the film sheet. Conventionally, this formatting is achieved in one of four ways:

(1) The TV monitor moves relative to a cassette holding the film, which is stationary and has a lens and a selectively operable shutter between the TV monitor and the cassette. The field of view of the lens comprehends the entire displacement of the TV monitor, and multiple exposures of the film are carried out by operating the shutter after the TV monitor has been indexed to a position relative to the casette at which the image of the TV monitor will be focused on the proper location on the film.

(2) The TV monitor is stationary and the cassette holding the film moves. This is the converse of the first approach.

(3) The TV monitor and the cassette containing the film are both stationary. A multiple lens/shutter system is provided, each lens of the system having a field of view limited to the monitor but being focused on a different portion of the film. Selective operation of the shutters will place an image of the TV monitor in a desired location on the film.

(4) A combination of (1), (2) and (3). For example, three laterally displaced lens/shutter systems could be provided to selectively position an image at any of three different lateral locations. Either the film or the TV monitor could be moved transversely to provide transversally located images on the film.

In addition to the movements described above, it is often necessary to change formats from, say, a $2\times2$ arrangement to a $4\times4$ arrangement. As a consequence, conventional multi-imagers combine their x, y and z movements to achieve multi formatting and to change from one format to another.

While the above-described mechanical arrangements work reasonably well and are in wide use, the mechanisms are complex, and relatively large in order to accommodate the necessary movements involved. A non-mechanical arrangement would be highly desirable in order to reduce mechanical complexity and size. It is therefore an object of the present invention to provide a new and improved multi-imager that is entirely electronic in nature, and does not require relative movement between the TV monitor and the film in order to format images on the film.

There are many systems available that electronically change the size and/or position of the video image. The available systems however are primarily for use in television broadcasting studios and they are either relatively complicated and expensive and/or lose resolution during the change of size or position. However, there are no known systems that electronically vary the size and position of video images and enable the selective positioning of the reduced image without loss in resolution for multi-imaging purposes. The objectives of a multi-imaging system are different than for a TV broadcasting system and the problems encountered in each system are much different. Thus, at least the presently available studio systems cannot be used to electronically effect multi-imaging on a commercial basis.

According to the present invention there is provided an electronic imaging system comprising: (a) a memory having $n$ syllables of $m$ words for storing a $p$ level representation of a video image; (b) an N-lines per frame raster generator for producing N-horizontal synchronization pulses per vertical frame synchronization pulse, wherein N is greater than either $n$ or $m$; (c) data processing circuitry responsive to said synchronization pulses for converting said $n$ syllables, within the time for vertical synchronization pulses to define a frame and in timed relationship to the horizontal synchronization pulses, into a plurality of video signals, each of which contains $m$ signals and represents a line of $m$ picture elements of the image; (d) a TV monitor having a screen on which an electron beam is incident for producing a display; (e) a deflection circuit responsive to said synchronization pulses for causing said beam to scan said screen and produce an N-line raster; (f) a modulation circuit responsive to said video signals for modulating the intensity of said beam during its scan; (g) an optical lens system for focusing said screen on a film plane; and (h) means of making p passes into the p level memory and for producing a video signal of unit amplitude on the $i$th pass for each word having a level greater than $i$-1.

Various aspects of the invention will now be described without limiting the scope thereof.

In accordance with the invention, the raster generator of the control circuit has more lines than either the number of syllables or the number of words in a syllable. As a consequence of this situation, the picture elements of the image in the memory will occupy only a portion of the screen of the TV monitor.

The left margin of the image will be indented relative to the left raster margin by an amount that depends on the delay between converting a syllable into a video signal representing a line of picture elements of the image and the occurrence of a horizontal synchronization pulse. Such delay is adjustable thereby providing control over the horizontal positioning of the image on the TV monitor and thus on the film. On the other hand, the top margin of the image on the TV monitor will depend upon the delay between the start of conversion of the first syllable of the memory into a video signal and occurrence of a vertical synchronization pulse that marks the start of a frame. This delay is also adjustable thereby providing control over the vertical positioning of the image on the TV monitor and thus on the film.

By controlling the rate at which a syllable is converted into a video signal representing a line of picture elements of the image, the horizontal width of the image can be controlled, thereby permitting the image size to be increased or decreased electronically.

The $n \times m$ matrix constituting the memory may be derived from (a) $n \times$ (b)$m$ matrix (where $a$ and $b$ are integers) by an interpolation process in order to fit the image on the TV monitor into a predetermined size. In addition, by reason of the scanning speed of the TV monitor and bandwidth limitations associated therewith, it is sometimes not possible for the TV monitor to display all of the possible levels in each word in the digital memory. In such case, the memory can be converted into video signals level-by-level by making $p$ passes of the memory. In the $i$th pass, a video signal of unit amplitude is produced for each word in the syllable in which the level in the word is greater than $i$-1. In this manner, the memory is scanned level-by-level and displayed on the TV monitor. Inasmuch as the photographic process involved in an integrating one, the resulting optical image will contain all of the information in the digital memory to the extent that the film itself is capable of reproducing the variations.

Brief description of drawings

An embodiment of the present invention is shown in the accompanying drawings wherein:—

Fig. 1 is a block diagram of an electronic multi-imager according to the present invention;

Fig. 2 is a time diagram showing the horizontal deflection current for the TV monitor and showing consecutive sets of video signals associated with the horizontal deflection current;

Fig. 3 is a time diagram showing the vertical deflection current for the TV monitor in association with the video signals;

Fig. 4 is a block diagram showing the manner in which conversion from one matrix size to another matrix size is carried out;

Fig. 5 is a block diagram showing a variable logic device associated with a buffer for making multiple passes of the digital memory and reading it out;

Fig. 6A is a level diagram showing the contents of each word of a syllable;

Fig. 6B is a time diagram showing the manner in which the syllable is sequentially read out using the apparatus shown in Fig. 5; and

Fig. 7 is a block diagram of the electronic multi-imager of Fig. 1 where the control means is a programmable microprocessor and associated circuitry.

Best mode for carrying out the invention

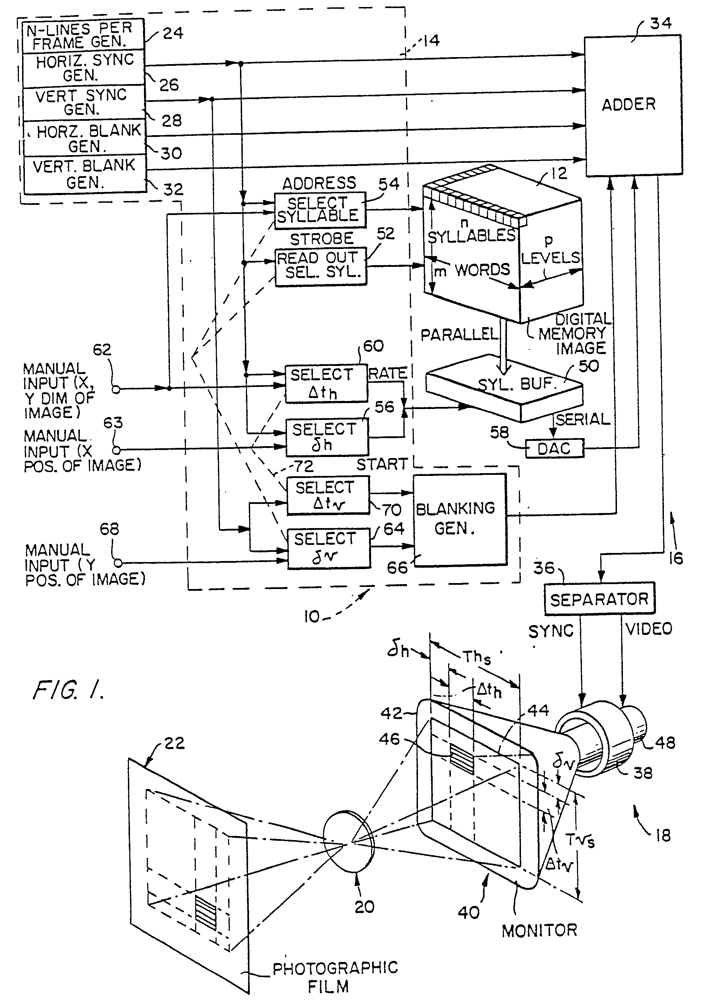

Referring now to Fig. 1 of the drawing, reference numeral 10 designates an electronic multi-imager according to the present invention. Multi-imager 10 comprises digital memory 12, control circuitry 14, video-processing circuitry 16, TV monitor 18, optical lens system 20 and film cassette 22. Digital memory 12 has $n$ syllables of $m$ words for storing a $p$ level representation of an image where each word $m$ has $p$ levels. In other words, if $m$ were 512 and $p$ were 8, then each syllable in the memory would comprise typically 512 sets of registers each of which is eight bits in size.

Control circuit 14 includes an N-lines per frame raster generator 24 which produces N horizontal synchronization pulses for each vertical frame synchronization pulse in a manner well-known in the art. The time relationship between the vertical and horizontal synchronization pulses is shown in the lower portion of Fig. 3 which shows a non-interleaved raster where the frequency of the vertical synchronization pulses is 60 Hz and the frequency of the horizontal synchronization pulses depends on the number of lines per inch of the raster, for simplicity in illustrating the vertical synchronization pulses, the equalizing pulses that occur on each side of the vertical synchronization pulse and the serrations within the vertical synchronization pulses are omitted. However, the synchronization signals are entirely conventional and are well-known in the art.

Generator 24 thus comprises a horizontal synchronizing generator 26 which produces N-horizontal synchronization pulses within the frame time of the raster, vertical synchronization generator 28 which generates a vertical synchronization pulse (and the necessary equalizing pulses every 1/60th seconds), horizontal blanking circuit 30 for generating blanking pulses that comprehend the horizontal synchronization pulses, and vertical blanking generator 32 for generating vertical blanking pulses that comprehend the vertical synchronization pulses. The horizontal and vertical blanking pulses blank the screen during the horizontal and vertical retrace time of the electron beam on the screen.

All of the synchronization pulses are combined in adder 34 whose output is applied through synchronization pulse separator 36 to TV monitor 18. Separator 36 separates any video signals present in the output of adder 34 from the synchronization pulses and applies the synchronization signals to the deflection circuit 38 of monitor 18.

Monitor 18 comprises a TV monitor 40 having screen 42 on which electron beam 44 is incident for producing display 46. The monitor also includes deflection circuit 38 responsive to synchronization signals supplied by separator 36 for causing beam 44 to scan screen 42 and produce an N-line raster as is well-known in the art. Beam 44 is modulated during its scan by modulating circuit 48 to which the video output of separator 36 is applied.

Associated with memory 12 is syllable buffer 50 which is capable of buffering a single syllable that is read-out in parallel from memory 12 in response strobing of circuit 52. Addressing of memory 12 is achieved by address circuit 54 which will select the particular syllable from memory 12 which is read out by circuitry 52.

In addition to generator 24 and circuits 52 and 54, control circuit 14 also includes strobe circuit 56 for initiating and carrying out a serial transfer of data in buffer 50 into the digital-to-analog-converter (DAC) 58 whose output is applied to adder 34. The rate at which data are read out from buffer 50 is determined by circuit 60 in accordance with manual input 62.

The remaining parts of control circuit 14 include circuit 64 which controls blanking generator 66 producing selective blanking pulses intermediate horizontal synchronization pulses, these pulses terminating subsequent to a vertical synchronization pulse after a time determined in accordance with the setting of manual input 68. Circuitry 70 also applied to blanking generator 66 determines the time during which the output of blanking generator 66 is suppressed. A relationship exists between the rate at which data is read out from the buffer 50 and the suppression of blanking pulses, and this interrelationship is indicated by connection 72.

In operation, generator 24 operates in a conventional way to cause electron beam 44 of the monitor to scan screen 42 producing an N-line raster. Circuit 54 clocked by the output of horizontal synchronization generator 26 will sequentially address the $n$-syllables in memory 12 beginning at a time relative to a vertical synchronization pulse determined by manual input 68. This time delay between the occurrence of the vertical synchronization pulse and addressing of memory 12 as well as the strobing of the address in memory by circuit 52 is designated $\delta_v$ (see Fig. 3).

For example, $\delta_v$ corresponds to a certain number of raster lines which would be blanked on the screen 42. Thus, $\delta_v$ is proportional to distance on the screen.

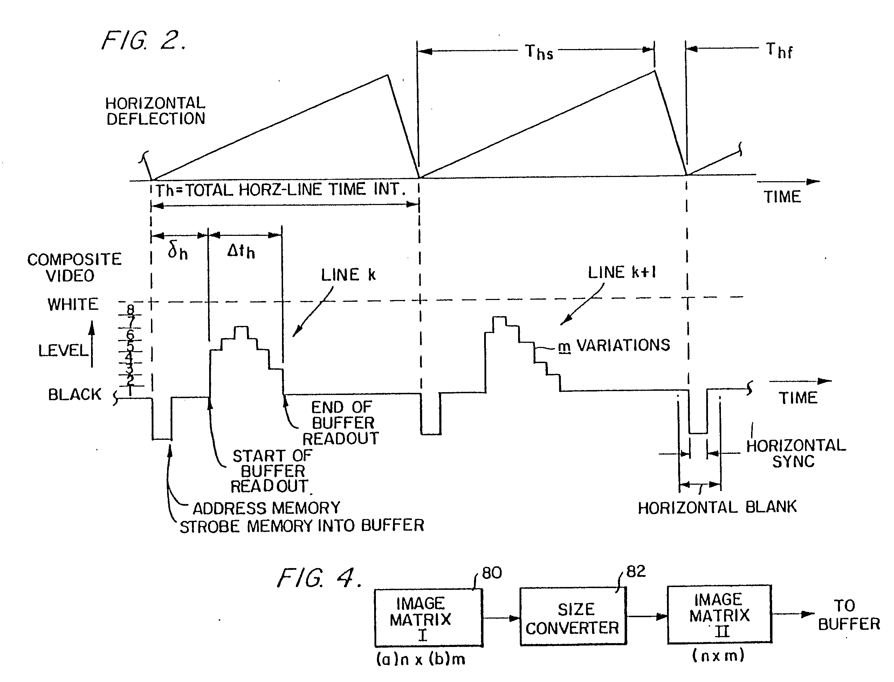

After the beam has scanned these blank lines, buffer 50 would contain the first syllable in memory 12, and this buffer would be strobed a period of time following the next horizontal synchronizing pulse determined by the setting of manual input 63. As shown in Fig. 2, this period of time is designed $\delta_h$. After the delay $\delta_h$, circuit 56 is effective to cause buffer 50 to be read out into DAC 58 at a rate determined by circuit 60 in accordance with manual setting 62. Normally, the rate at which data are serially transferred from the buffer into the digital-to-analog-converter would be the line frequency so that a video signal is produced at the output of circuit 58 representing one line of the image stored in memory 12. As shown in Fig. 2, the $m$ variations in amplitude occur within the time interval $\Delta t_h$ which, because $m$ is less than N, will cause the video signal to occupy only a portion in the interval between successive horizontal synchronization pulses.

When the next horizontal synchronizing pulse occurs, the second line in memory 12 will be read into buffer 50 so that upon a delay of $\delta_h$, the second line of a memory will be transferred into DAC 58 and thus be converted into the video signal representing the second line of the picture elements of the image.

This process is repeated until the entire $n$ syllables of the memory have been read out into buffer 50, the contents of the buffer being serially read out and converted into video signals. Each video signal begins after delay time $\delta_h$ following a horizontal synchronization pulse and lasts less than the horizontal-line scan of the raster. It causes the beam of the TV monitor to produce one horizontal line of the image comprising $m$ picture elements. When all of the memory has been read out, image 46 appears on screen 42 as shown in Fig. 1 at a location dependent on $\delta_v$ and $\delta_h$. From the above, it can be seen that the left margin of the image will be indented relative to the left raster margin by an amount that depends on the delay between converting a syllable into a video signal representing a line of picture elements of the image and the occurrence of a horizontal synchronization pulse, namely the delay time $\delta_h$. Such delay is selectively adjustable by reason of manual input 63. This provides a user with control over the horizontal positioning of the image on the TV monitor.

The top margin of the image on the TV monitor will depend upon the delay between the start of conversion of the first syllable of the memory into a video signal and the occurrence of a vertical synchronization pulse that marks the start of a frame. This last mentioned delay is designated $\delta_v$ as indicated in Fig. 3. This delay is also selectively adjustable by reason of manual input 68 thereby providing control over the vertical position of the image on the TV monitor. Thus, by suitable inputs at 63 and 68, an image representing the contents of memory 12 can be positioned in any location on the screen 42 allowing the user to select the ultimate location of the image on the film.

Normally, the rate at which data are read out from buffer 50 is the same as the line frequency of the monitor but this can be changed by suitable inputs at 62. This will enlarge or contract the size of the image on the screen.

Lens 20 focuses the screen on a film plane within cassette 22, the cassette containing a sheet of film 76 in the film plane. Consequently, image 46 on the screen 42 appears as image 46a on film 76. Therefore, suitable adjustment to the manual inputs 62, 63 and 68 will permit the user to locate an image contained in memory 12 at any place within a field of view determined by the raster on the film 76. In actual use, after an image has been properly located on the photographic film, memory 12 would be loaded with a new image and upon suitable adjustment to manual inputs 62, 63, and 68, the new image could be located at any desired position on the photographic film.

Sometimes the initial image size is too large for being formatted on a given photographic film. When this occurs, the arrangement shown in Fig. 4 can be utilized. In this arrangement, an image matrix I of size $(a)n \times (b)m$ is converted, by an interpolation process carried out by size inverter 82, into image matrix II, that is $n \times m$ in size. Once this preprocessing is completed, the procedure described in connection with Fig. 1—3 can be carried out to display the image on the screen of TV monitor and position it properly so that the image will be formatted properly on the film.

Fig. 2 includes a simplified showing of video signals wherein the amplitude at each of the $m$ positions on a line has eight possible levels. In actual practice, the number of levels is usually greater than this; and 64 or even 128 levels are not unusual. In general, there will be $p$ levels which means that the intensity of the electron beam scanning the screen must be able to vary by the factor $p$ at each of the $m$ positions in a line. When dealing with 1000 line or more rasters and levels of 64 or more, the bandwidth requirements of the electronics are often greater than can be achieved with conventional designs. Consequently, reproduction of an image on a TV monitor with all of the possible levels available in the memory cannot always be achieved.

In order to reduce the bandwidth limited response of the TV monitor, the image can be built-up on the screen, level-by-level, with the photographic film serving to integrate information in the digital image. With this approach, the beam need be switched either on or off at each picture element rather than modulated by the factor $p$.

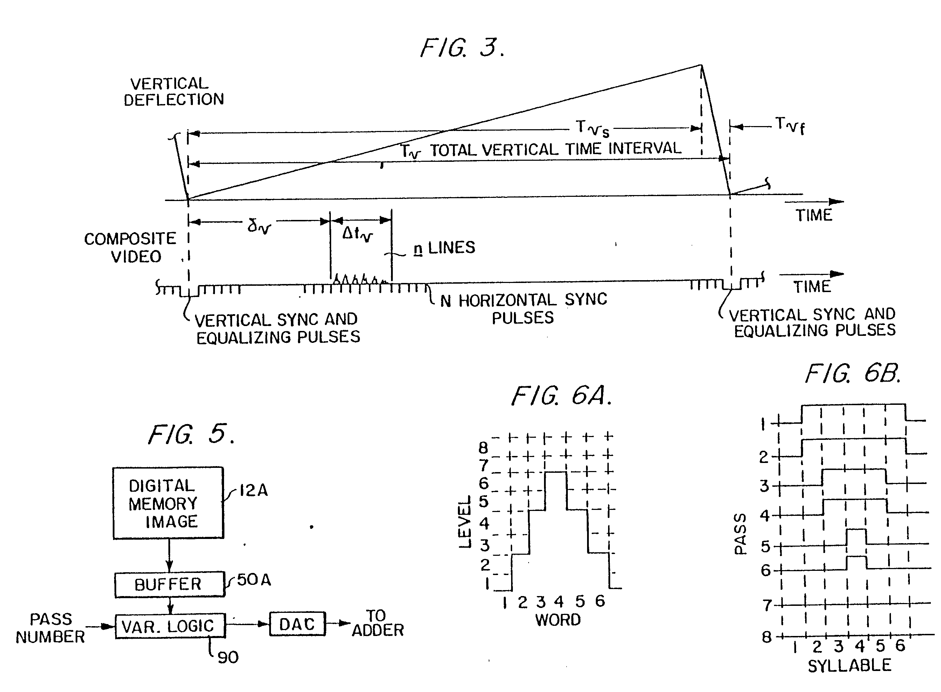

Fig. 5 shows a way to achieve this result by reading out a $p$ level digital image $p$ times. Digital memory image 12A is buffered at 50A in the manner previously described in connection with Fig. 1. In this case, however, variable logic circuit 90 is associated with buffer 50A and serves to examine the level that is read-out of the buffer to logically determine whether the beam is to be turned on or off.

In operation, on the first pass through the memory, logic circuit 90 examines the first syllable in the buffer and converts the first syllable into a set of video signals that represent the first line of picture elements of the image. If the level of any word in the syllable exceeds level one, the amplitude of the signal representing, such word, thereby is unity, and will cause the beam to be turned on when the scan reaches this word producing a unit amount of light on the screen on the elemental area that represents the position of the word on the screen. The next $n$-1 syllables are sequentially inputted to the buffer and handled the same way.

When this first pass is complete, the second pass of the memory is executed, and the first syllable is again located in the buffer. This time logic circuit 90 determines whether the level of any word in the syllable exceeds level two; and if this is the case, the amplitude of the signal representing such word is unity while the amplitude of the signal representing any word whose level is less than level two will be zero. The read-out continues until the second pass is completed. The third pass then begins and the process described above is repeated until $p$ passes of the memory have been made. In general, on the $i$th pass, a video signal of unit amplitude is produced for each word in the syllable in which the level in the word is greater than $i$-1.

Fig. 6A shows a simplified video signal having 8 possible levels. The syllable from which this video signal was developed would be passed into the buffer 8 times as 8 passes would be made by variable logic 90. Words 2—6 of the syllable have a level exceeding unity so that the video output on the first pass of the syllable would be as indicated by line 1 in Fig. 6B. Successive passes would examine successive slices of the syllable producing video signals on each pass as indicated by lines 2—8 in Fig. 6B. Each of the eight video signals would produce, on the same line on the screen, a light pattern matching the signals in lines 1—8 of Fig. 6A.

As a consequence of this arrangement, each pass produces only on or off modulation of the video signal which is well within the bandwidth capability of the electronics. The film integrates all of the passes and will reproduce all of the detail contained in the image.

Fig. 7 is a block diagram showing of the electronic multi-imager of Fig. 1 with control circuitry 14 replaced by a programmable microprocessor and well known associated circuitry such as interface circuits, i.e., input/output circuit 102 attached to the input of the microprocessor 101; input/output circuit 103 attached to keyboard KB, and input/output circuit 104 attached to adder 34. The microprocessor also includes clock 106, random access memory (RAM) 107, and read-only memory (ROM) 108 attached thereto. Microprocessor 101 is coupled to control memory 12 and its buffer 50 that couples video signals through the digital to analog converter (DAC) 58 to the adder. These circuits are well known to those skilled in the art.

While the invention disclosed above utilizes a digital memory for storage purposes, the memory also can be in the form of an analog memory such as charge-coupled devices or in the form of a combination of analog and digital memory components. Moreover, the control circuit for generating the necessary synchronization signals for the raster, and the data processing circuitry for producing the sets of video signals, can be realized in whole or in part by digital or analog circuits, and in fact can be realized by programmable devices such as microprocessors.

It is believed that the advantages and improved results furnished by the method and apparatus of the present invention are apparent from the foregoing description of the preferred embodiment of the invention.

## Claims

1. An electronic imaging system comprising:

(a) a memory (12) having $n$ syllables of $m$ words for storing a $p$ level representation of a video image;

(b) an N-lines per frame raster generator (14) for producing N-horizontal synchronization pulses per vertical frame synchronization pulse, wherein N is greater than either $n$ or $m$;

(c) data processing circuitry (52, 54; 34) responsive to said synchronization pulses for converting said $n$ syllables, within the time for vertical synchronization pulses to define a frame and in timed relationship to the horizontal synchronization pulses, into a plurality of video signals, each of which contains $m$ signals and represents a line of $m$ picture elements of the image;

(d) a TV monitor (18) having a screen (42) on which an electron beam is incident for producing a display;

(e) a deflection circuit (38) responsive to said synchronization pulses for causing said beam to scan said screen (42) and produce an N-line raster;

(f) a modulation circuit (48) responsive to said video signals for modulating the intensity of said beam during its scan;

(g) an optical lens system (23) for focusing said screen (42) on a film plane; and

(h) means for making p passes into the p level memory (12) and for producing a video signal of unit amplitude on the $i$th pass for each word having a level greater than $i$-1.

2. An electronic imaging system according to claim 1 characterized by selectively operable means (56, 64) for changing the timed relationship between the $n$ sets of video signals and the synchronization signals for altering the relative position of the image on the screen.

3. An electronic imaging system according to claim 1 or claim 2 characterized by an optical lens system (23) associated with the screen (14) for focusing the screen (42) on a film plane, and a film sheet (76) in the film plane.

4. An electronic imaging system according to any of claims 1 to 3 characterized in that the control means (14) generates horizontal and vertical synchronization pulses, and the data processing circuitry includes a buffer (50) for storing at least one syllable, means (52) for sequentially reading out syllables from the memory into the buffer, and horizontal image positioning means (56) responsive to the contents of the buffer for generating a set of video signals representing a line of picture elements of the image, each set commencing a predetermined time subsequent to a horizontal synchronization pulse for establishing the horizontal position of the image on the screen.

5. An electronic imaging system according to claim 4 characterized in that the predetermined time is selectable.

6. An electronic imaging system according to claim 5 characterized in that the data processing means includes vertical image positioning means (64) for initiating the readout of the syllable from the memory a predetermined time subsequent to a vertical synchronization pulse for establishing the vertical position of the image on the screen.

7. An electronic imaging system according to claim 6 characterized in that the last mentioned predetermined time is selectable.

8. An electronic imaging system according to claim 4 characterized in that the data processing means includes means (60) for changing the rate at which the contents of the buffer (50) generates a set of video signals whereby the size of the image on the screen is established.

9. An electronic imaging system according to any of claims 1 to 8 wherein the control means includes a programmable microprocessor.

10. An electronic imaging system according to any of claims 1 to 9 characterized in that each word defines one of $p$ levels.

11. An electronic imaging system according to any of claims 1 to 10 characterized in that $n=m$.

12. An electronic imaging system according to any of claims 1 to 11 characterized by means for deriving the $n \times m$ matrix, constituting the memory, from an (a)$(n) \times$(b)$(m)$ matrix by an interpolation process wherein $a$ and $b$ are integers.

13. An electronic imaging system according to any of claims 1 to 12 characterized by means for making p passes into the p level memory and for producing a video signal of unit amplitude on the $i$th pass for each word having a level greater than $i$-1.

## Patentansprüche

1. Elektronisches Abbildungssystem mit:

a) einem Speicher (12) mit $n$ Silben von $m$ Worten zur Abspeicherung einer $p$-Pegel-Darstellung eines Videobildes;

b) einem Rastergenerator (14) für N-Linien pro Bild zur Erzeugung von N horizontalen Synchronisationsimpulsen pro vertikalem Bildsynchronisationsimpuls, wobei N größer ist als sowohl $n$ als auch $m$;

c) einem Datenverarbeitungsschaltkreis (52, 54;

34), der auf die Synchronisationsimpulse anspricht, zur Umwandlung der $n$ Silben, innerhalb der Zeit für vertikale Synchronisationsimpulse, um ein Bild festzulegen, und in zeitlich abgestimmtem Verhältnis zu den horizontalen Synchronisationsimpulsen, in eine Vielzahl von Videosignalen, von denen jedes $m$ Signale enthält und eine Zeile aus $m$ Bildelementen des Bildes repräsentiert;

d) einem TV-Monitor (18) mit einem Bildschirm (42), auf den ein Elektronenstrahl auftrifft, um eine Anzeige zu erzeugen;

a) einem Ablenkungsschaltkreis (38), der auf die Synchronisationsimpulse anspricht, um zu bewirken, daß der Strahl den Bildschirm (42) abtastet, um ein N-Linien-Raster zu erzeugen;

f) einem Modulationsschaltkreis (48), der auf die Videosignale anspricht zur Modulation der Intensität des Strahles während der Abtastens;

g) einem optischen Linsensystem (23) zur Fokussierung des Bildschirms (42) auf einer Filmebene und

h) Mittel zur Durchführung von p Durchläufen in den p-Pegel-Speicher (12) und zur Erzeugung eines Videosignals mit Einheitsamplitude im i-ten Durchlauf für jedes Wort, das einen Pegel größer als $i$-1 besitzt.

2. Elektronisches Abbildungssystem nach Anspruch 1, gekennzeichnet durch selektiv betreibbare Mittel (56, 64) zum Wechseln des zeitlichen Verhältnisses zwischen den n Gruppen der Videosignale und den Synchronisationssignalen zur Änderung der relativen Position den Bildes auf dem Bildschirm.

3. Elektronisches Abbildungssystem nach Anspruch 1 oder 2, gekennzeichnet durch ein optisches Linsensystem (23), das dem Bildschirm (14) zugeordnet ist, zur Fokussierung des Bildschirms (42) auf einer Filmebene, und einem Filmbogen (76) in der Filmebene.

4. Elektronisches Abbildungssystem nach einem der Ansprüche 1 oder 3, dadurch gekennzeichnet, daß die Steuereinrichtung (14) horizontale und vertikale Synchronisationsimpulse erzeugt und daß der Datenverarbeitungsschaltkreis einen Puffer (50) zur Abspeicherung von zumindest einer Silbe, Mittel (52) zum sequentiellen Auslesen von Silben aus dem Speicher in den Puffer und horizontale Abbildungspositioniermittel (56) aufweist, die auf den Inhalt das Puffers ansprechen zur Generierung einer Gruppe von Videosignalen, die eine Linie aus Bildelementen des Bildes repräsentieren, wobei jede Gruppe eine festgelegte Zeit nachfolgend auf einen horizontalen Synchronisationsimpulse beginnt, um die horizontale Position des Bildes auf dem Bildschirm festzulegen.

5. Elektronisches Abbildungssystem nach Anspruch 4, dadurch gekennzeichnet, daß die festgelegte Zeit auswählbar ist.

6. Elektronisches Abbildungssystem nach Anspruch 5, dadurch gekennzeichnet, daß die Datenverarbeitungseinrichtung vertikale Abbildungspositioniermittel (64) umfaßt zur Initialisierung des Auslesens der Silbe aus dem Speicher eine festgelegte Zeit nachfolgend auf einen vertikalen Synchronisationsimpuls zur Festlegung der vertikalen Position des Bildes auf dem Bildschirm.

7. Elektronisches Abbildungssystem nach Anspruch 6, dadurch gekennzeichnet, daß die zuletzt erwähnte festgelegte Zeit auswählbar ist.

8. Elektronisches Abbildungssystem nach Anspruch 4, dadurch gekennzeichnet, daß die Datenverarbeitungseinrichtung Mittel (60) umfaßt zur Veränderung der Rate, mit der der Inhalt des Puffers (50) eine Gruppe von Videosignalen erzeugt, wodurch die Größe des Bildes auf dem Bildschirm festgelegt ist.

9. Elektronisches Abbildungssystem nach einem der Ansprüche 1 bis 8, bei dem die Steuereinrichtung einen programmierbaren Mikroprocessor umfaßt.

10. Elektronisches Abbildungssystem nach einem der Ansprüche 1 bis 9, dadurch gekennzeichnet, daß jedes Wort einen von $p$ Pegeln festlegt.

11. Elektronisches Abbildungssystem nach einem der Ansprüche 1 bis 10, dadurch gekennzeichnet, daß $n$ gleich $m$ ist.

12. Elektronisches Abbildungssystem nach einem der Ansprüche 1 bis 11, gekennzeichnet, durch Mittel zur Herleitung der $n \times m$-Matrix, die den Speicher bilder, aus einer $(a)(n) \times (b)(m)$-Matrix durch einen Interpolationsprozeß, wobei $a$ und $b$ ganze Zahlen sind.

13. Elektronisches Abbildungssystem nach einem der Ansprüche 1 bis 12, gekennzeichnet durch Mittel zur Durchführung von p Durchläufen in den p-Pegel-Speicher und zur Erzeugung eines Videosignals mit Einheitsamplitude in dem i-ten Durchlauf für jedes Wort, das einen Pegel größer als $i$-1 besitzt.

## Revendications

1. Dispositif electronique de traitement d'images comprenant:

a) une mémoire (12) possédant n syllabes de m mots pour mémoriser une représentation à $p$ niveau d'une image vidéo;

b) un générateur de balayage (14) à N lignes par trame pour produire N signaux de synchronisation horizontale par impulsion de synchronisation de trame verticale, dans lequel N est plus grand que $n$ ou $m$;

c) une circuiterie de traitement de données (52, 54, 34) sensible auxdites impulsions de synchronisation pour convertir lesdites $n$ syllabes, selon une période de temps dans laquelle les impulsions de synchronisation verticale définissent une trame et en relation temporelle avec les impulsions de synchronisation horizontale, ou une pluralité de signaux vidéo, chacun contenant m signaux et représente une ligne de m éléments de trame de l'image;

d) un moniteur TV (18) possédant un écran (42) sur lequel on projete un faisceau d'électrons pour réaliser un affichage;

e) un circuit déflecteur (38) sensible auxdites impulsions de synchronisation pour balayer ledit écran (42) par ledit faisceau et produire un entre-laçage de N lignes;

f) un circuits de modulation (48) sensible auxdits signaux vidéo pour moduler l'intensité dudit faisceau pendant son balayage;

g) un dispositif à lentilles optiques (23) pour focaliser ledit écran (42) sur un plan de film; et

h) un moyen pour réaliser p passes dans les p niveaux de la mémoire (12) et pour engendrer un signal vidéo d'amplitude unitaire par la ième passe pour chaque mot ayant un niveau plus grand que i-1.

2. Dispositif électronique de traitement d'images selon la revendication 1, caractérisé par des moyens de fonctionnement selectifs (56, 64) pour modifier la relation temporelle entre les n ensembles de signaux vidéo et les signaux de synchronisation pour modifier la position relative de l'image sur l'écran.

3. Dispositif électronique de traitement d'images selon la revendication 1 ou 2, caractérisé par un dispositif à lentilles optiques (23) associé à l'écran (14) pour focaliser l'écran (42) sur un plan de film, et sur un plan formant feuille (76) dans le plan de film.

4. Dispositif électronique de traitement d'images selon l'une quelconque des revendications 1 à 3, caractérisé en ce que le moyen de commande (14) angendre des impulsions de synchronisation horizontale et verticale, et que la çircuiterie de traitement de données inclut une mémoire tampon (50) pour mémoriser au moins une syllabe, un moyen (52) pour extraire séquen-tiellement des syllabes depius la mémoire vers la mémoire tampon, et un moyen (56) pour positionner horizontalement l'image, sensible au contenu de la mémoire tampon pour engendrer un ensemble de signaux vidéo représentant une ligne d'éléments de trame de l'image, chaque ensemble commençant à un instant prédéterminé après une impulsion de synchronisation verticale pour établir la position horizontale de l'image sur l'écran.

5. Dispositif électronique de traitement d'images selon la revendications 4, caractérisé en ce que l'instant prédéterminé est paramétrable.

6. Dispositif électronique de traitement d'image selon la revendication 5, caractérisé en ce que le moyen de traitement de données inclut un moyen (64) pour positionner verticalement l'image pour commencer l'extraction de la syllabe depuis la mémoire un instant prédéterminé après une impulsion de synchronisation verticale pour établir la position verticale de l'image sur l'écran.

7. Dispositif électronique de traitement d'images selon la revendication 6, caractérisé en ce que le dernier instant prédéterminé mentionné est paramétrable.

8. Dispositif électronique de traitement d'images selon la revendication 4, caractérisé en ce que le moyen de traitement de données inclut un moyen (60) pour modifier la vitesse à laquelle le contenu de la mémoire tampon (50) engendre un ensemble de signaux vidéo afin d'établir la taille de l'image sur l'écran.

9. Dispositif électronique de traitement d'images selon l'une quelconque des revendications 1 à 8, dans lequel le moyen de commande inclut un microprocesseur programmable.

10. Dispositif électronique de traitement d'images selon l'une quelconque des revendications 1 à 9, caractérisé en ce que chaque mot définit un niveau de p niveaux.

11. Dispositif électronique de traitement d'images selon l'une quelconque des revendications 1 à 10, caractérisé en ce que n=m.

12. Dispositif électronique de traitement d'images selon l'une quelconque des revendications 1 à 11, caractérisé par un moyen pour dériver la matrice $n \times m$, constituer la mémoire, à partir d'une matrice $(a)(n) \times (b)(m)$ par un procédé d'interpolation dans lequel a et b sont des nombres entiers.

13. Dispositif de traitement d'images selon l'une quelconque des revendications 1 à 12, caractérisé par un moyen pour realiser p passes dans la mémoire à p niveaux et pour engendrer un signal vidéo d'amplitude unitaire sur la ième passe pour chaque mot ayant un niveau plus grand que i-1.

FIG. 1.

EP 0 098 264 B1

*FIG. 2.*

HORIZONTAL
DEFLECTION

$T_{hs}$

$T_{hf}$

TIME

Th=TOTAL HORZ-LINE TIME INT.

COMPOSITE
VIDEO

$\delta_h$

$\Delta t_h$

LINE k

LINE k+1

WHITE

LEVEL

BLACK

END OF
BUFFER
READOUT

$\underline{m}$ VARIATIONS

TIME

START OF
BUFFER
READOUT

HORIZONTAL
SYNC

ADDRESS MEMORY
STROBE MEMORY INTO BUFFER

HORIZONTAL BLANK

*FIG. 4.*

| IMAGE MATRIX I |  → | SIZE CONVERTER | → | IMAGE MATRIX II | → TO BUFFER |

80

82

(a)n x (b)m

(n x m)

# FIG. 3.

VERTICAL
DEFLECTION

$T_{vs}$

$T_v$ TOTAL VERTICAL TIME INTERVAL

$T_{vf}$

TIME

COMPOSITE
VIDEO

$\delta_v$

$\Delta t_v$

$\underline{n}$ LINES

TIME

VERTICAL SYNC AND
EQUALIZING PULSES

N HORIZONTAL SYNC
PULSES

VERTICAL SYNC AND
EQUALIZING PULSES

# FIG. 5.

DIGITAL
MEMORY
IMAGE        12A

↓

BUFFER        50A

↓

PASS
NUMBER → VAR. LOGIC → DAC → TO
ADDER
                90

# FIG. 6A.

LEVEL

8
7
6
5
4
3
2
1

1 2 3 4 5 6
WORD

# FIG. 6B.

PASS

1
2
3
4
5
6
7
8

1 2 3 4 5 6
SYLLABLE

EP 0 098 264 B1